# FASCICULE DE BREVET EUROPEEN

(11) **EP 3 194 671 B1**
(45) Date de publication et mention de la délivrance du brevet: **04.04.2018**
(21) Numéro de dépôt: 15734419.3
(22) Date de dépôt: 10.07.2015
(51) Int. Cl.: E03D 1/32, F16K 31/34

(54) **ROBINET DE REMPLISSAGE D'UN RÉSERVOIR DE TOILETTES AVEC ASSISTANCE HYDRAULIQUE**
HYDRAULISCH UNTERSTÜTZTES FÜLLVENTIL FÜR EINEN TOILETTENSPÜLKASTEN
HYDRAULICALLY ASSISTED FILLING VALVE FOR A TOILET CISTERN

(30) Priorité: 31.07.2014 FR 1457465
(43) Date de publication de la demande: 26.07.2017
(73) Titulaire: SIAMP CEDAP, 98000 Monaco (MC)
(72) Inventeur: MARNAS, Stéphane, F-06200 Nice (FR); PLAS, Olivier, F-06340 La Trinite (FR)
(74) Mandataire: Delorme, Nicolas
(86) Numéro de dépôt international: PCT/EP2015/065904
(87) Numéro de publication internationale: WO 2016/015977

(56) Documents cités:
- WO-A1-01/20205
- GB-A- 1 285 571
- GB-A- 2 339 882
- GB-A- 2 461 463
- US-A- 3 897 042
- US-A- 6 003 541
- US-B1- 6 192 916

## Description

La présente invention concerne un robinet de remplissage pour réservoir de toilettes selon le préambule de la revendication 1. Le plus souvent, les robinets de remplissage d'un réservoir de toilettes à fermeture mécanique comportent un flotteur de grande dimension lié à un long bras de levier, ou un système de biellettes, pour assurer l'effort de fermeture et lutter contre la pression hydraulique.

Ces robinets sont donc encombrants. De plus, l'effort de fermeture n'étant assuré que par le bras de levier, ces robinets ne peuvent être utilisés qu'à de faibles pressions hydrauliques. En outre, l'effort fournit par le bras de levier ne permet pas une fermeture rapide du robinet. Ainsi, durant la phase finale de la fermeture de ce type de robinet, il se produit, pendant plusieurs secondes, un sifflement qui peut constituer une gêne pour l'utilisateur.

Des régulateurs à clapet pour robinets de remplissage sont décrits par exemple dans les documents US3897042, US6192916, GB2339882, WO0120205,US6003541, GB2461463, GB1285571.

Le document US3897042 divulgue les caractéristiques techniques décrites dans le préambule de la revendication 1. Ce document est considéré comme étant l'état de la technique le plus proche. Un but de la présente invention est de réduire l'encombrement des robinets de remplissage d'un réservoir de toilettes. Un autre but de la présente invention est de fournir un robinet de remplissage d'un réservoir de toilettes qui soit fonctionnel avec des pressions hydrauliques supérieures à trois bars et qui puisse être fermé rapidement en réduisant les nuisances sonores pour l'utilisateur.

Dans le présent document on définit par « étanchéité », l'étanchéité à l'eau et aux solutions aqueuses.

Selon une définition générale, l'invention concerne un robinet de remplissage d'un réservoir de toilettes qui comprend,
(i) un corps dans lequel est ménagé une chambre présentant, un orifice amont conçu pour être connecté à une canalisation d'arrivée d'eau, et un orifice aval conçu pour être connecté à une canalisation de remplissage d'un réservoir de toilettes,
(ii) un piston comprenant une tête et une tige, conçu pour être déplacé entre une position ouverte dans laquelle la tête du piston autorise la circulation d'un liquide au travers de l'orifice aval et une position fermée dans laquelle la tête du piston obture l'orifice aval de façon étanche.

De plus, la tête du piston présente au moins une zone en contre-dépouille, adaptée pour permettre l'exercice d'une contre-pression hydraulique assistant le passage du piston vers sa position fermée. Le corps présente au moins une surface oblique par rapport à l'axe de déplacement du piston, juxtaposée à ladite au moins une zone en contre-dépouille. Ladite au moins une zone en contre-dépouille et ladite au moins une surface oblique forment une cavité annulaire. Une membrane élastomère, positionnée dans la chambre, recouvre la tête du piston et la cavité annulaire, pour étanchéifier l'obturation de l'orifice aval par la tête du piston.

Ainsi le robinet de remplissage d'un réservoir de chasse utilise une zone en contre-dépouille pour générer une contre-pression hydraulique qui assiste la fermeture du robinet de remplissage.

L'effort nécessaire pour obturer l'orifice amont est partagé entre le levier et la contre-pression générée sur la zone en contre-dépouille. Le robinet de remplissage selon l'invention peut donc utiliser un levier de dimensions réduites par rapport aux leviers présents dans la plupart des dispositifs de l'art antérieur.

De plus, la contre-pression générée sur la zone en contre-dépouille permet d'accélérer la fermeture du robinet de remplissage ce qui réduit les éventuelles nuisances sonores pour l'utilisateur. L'utilisation avantageuse d'une contre-pression hydraulique pour assister l'obturation de l'orifice aval, permet au robinet de remplissage selon l'invention d'être opérationnel quelle que soit la pression de l'eau issue de la canalisation d'arrivée d'eau.

En outre, la surface oblique du corps permet d'augmenter la contre-pression hydraulique exercée sur la tête du piston, en orientant le flux de liquide vers la zone en contre-dépouille, pour déplacer le piston.

Selon un mode de réalisation préférentiel, ladite au moins une zone en contre-dépouille et ladite au moins une surface oblique forment une cavité annulaire.

De plus, la cavité annulaire formée par la zone en contre-dépouille et la surface oblique permet la génération optimale de la contre-pression hydraulique, pour assister la descente du piston.

Par ailleurs, la membrane élastomère peut être conçue pour épouser la forme de la cavité annulaire, pour former une concavité permettant la transmission d'un effort de contre-pression sur la tête du piston.

De plus, la concavité de la membrane peut être conçue pour être étirée, pour permettre le déplacement du piston.

Selon un mode de réalisation, le corps peut comprendre au moins une ouverture obturée par un chapeau.

L'assemblage du robinet de remplissage selon l'invention est ainsi aisé.

Selon un même mode de réalisation, la membrane peut être positionnée entre le chapeau et le corps, pour assurer l'étanchéité de l'obturation de l'ouverture par le chapeau.

En outre, le piston peut être conçu pour être manoeuvré par un levier présentant une came à une première extrémité et lié à une boite contenant un flotteur à une seconde extrémité.

Ainsi, le robinet de remplissage selon l'invention utilise un actionneur peu couteux et de fabrication simple. De plus, l'assistance hydraulique permet d'utiliser un levier de petite taille qui permet de réduire l'encombrement du robinet de remplissage et les frais de fabrication.

D'autres caractéristiques et avantages se dégageront de la description qui va suivre en regard des dessins annexés qui représentent, à titre d'exemple non limitatif, une forme de réalisation de l'invention, dans lesquels :
- La figure 1 est une vue en perspective du robinet selon l'invention ;
- La figure 2 est une vue en coupe du corps du robinet ;
- La figure 3 est une vue en coupe du corps lorsque le robinet est ouvert ;
- La figure 4 est une vue en coupe du corps lorsque le robinet est fermé.

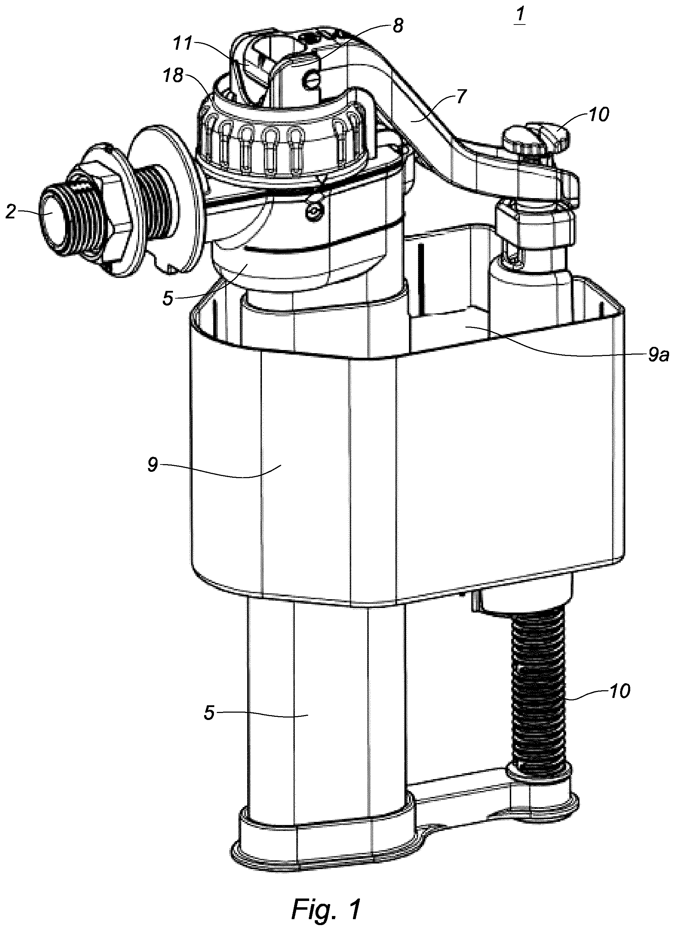

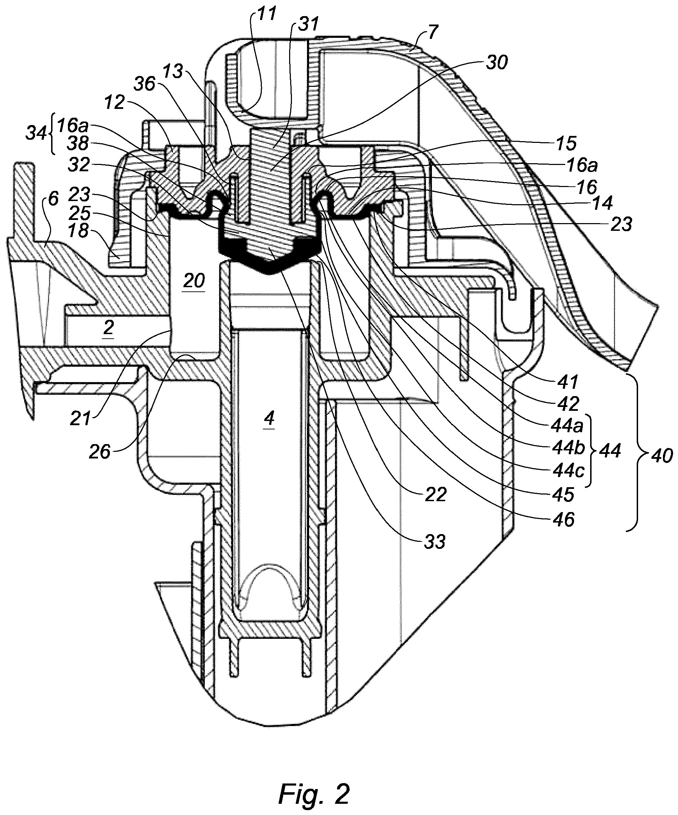

Les figures 1 et 2 représentent un robinet 1 de remplissage d'un réservoir de toilettes.

Le robinet de remplissage 1 est adapté pour être introduit dans un dispositif de toilettes non représenté ici.

Le robinet de remplissage 1 comprend un corps 6 formant une chambre 20 connectée à une canalisation d'arrivée d'eau 2 et une canalisation de remplissage 4. Un carter 5 recouvre le corps 6 et la canalisation de remplissage 4.

De plus, le robinet de remplissage 1 comprend un levier 7 lié en rotation à l'une de ses extrémités formant une came 11, au robinet 1 de remplissage, par une chape 8.

Une seconde extrémité du levier 7 est reliée à une boite 9 contenant un flotteur 9a.

Le flotteur 9a coulisse sur le carter 5 qui assure ainsi une fonction de guide en translation.

Le flotteur 9a est fixé au levier 7 au moyen d'une vis de réglage 10, comme cela est illustré sur la figure 1. La rotation de la vis de réglage 10 permet d'ajuster la hauteur de la boite 9 et du flotteur 9a dans un réservoir de chasse. Il est ainsi possible de régler le volume d'eau désiré dans le réservoir en faisant varier la hauteur de la boite 9 et du flotteur 9a.

Comme on peut le voir sur la figure 2, la chambre 20 présente une ouverture 23 et deux orifices : un orifice amont 21 et un orifice aval 22.

La chambre 20 présente, en outre, une paroi interne 25 sensiblement cylindrique coaxiale de la canalisation de remplissage 4, et une paroi inférieure 26.

L'orifice amont 21 est relié à une canalisation d'arrivée d'eau 2. La canalisation d'arrivée d'eau 2 peut, en outre, être reliée à un réseau d'eau courante pour alimenter le robinet 1 de remplissage en eau.

L'orifice amont 21 est positionné dans la paroi interne 25 à proximité de la paroi inférieure 26.

L'orifice aval 22 est relié à la canalisation de remplissage 4, qui permet de faire circuler l'eau issue de la canalisation d'arrivée d'eau 2 vers un réservoir d'un dispositif de toilettes.

La canalisation de remplissage 4 débouche dans la chambre 20 de telle sorte que le volume de la chambre forme un anneau.

L'ouverture 23 est obturée par une membrane 40 qui sera décrite ultérieurement. L'ouverture 23 est ceinturée par un épaulement. La membrane 40 est maintenue sur l'épaulement de l'ouverture 23, par un chapeau 12.

Le chapeau 12 est sensiblement circulaire, un perçage 13 est aménagé sensiblement en son centre pour permettre le passage d'un piston 30.

Le chapeau 12 présente une face interne 14 contre laquelle est positionnée la membrane 40. La face interne 14 présente une rainure circulaire 15 concentrique du perçage 13. De même, la face interne 14 présente une gorge 16 concentrique du perçage 13 et présentant un diamètre supérieur au diamètre de la rainure circulaire 15. Il est remarquable que la gorge 16 comprend une surface oblique 16a par rapport à l'axe du perçage 13.

Le chapeau 12 est fixé sur l'ouverture 23 par un écrou 18, tel que représenté sur la figure 1.

Le piston 30 présente une tige 31 et une tête 32. La tige 31 est adaptée pour coopérer avec la came 11 du levier 7.

La tête 32 du piston 30 est positionnée à l'intérieur de la chambre 20. Comme on peut l'observer sur la figure 2, dans le mode de réalisation ici présenté, la tête 32 du piston 30 présente une extrémité conique.

La tête 32 du piston 30 présente la géométrie d'un cylindre dont le diamètre est sensiblement égal au diamètre de l'orifice aval 22.

La tête 32 du piston 30 comprend un pointeau conique 33 destiné à être introduit dans l'orifice aval 22.

La tête 32 comprend un retour cylindrique 36 dont la surface extérieure présente une zone en contre-dépouille 38. Cependant, selon d'autres modes de réalisation, la tête 32 pourrait présenter une pluralité de zones en contre-dépouille distinctes.

Le retour cylindrique 36 est adapté pour coulisser dans la rainure circulaire 15, pour assurer le guidage en translation du piston 30. De plus, il est observable sur la figure 2 que la zone en contre-dépouille 38 est positionnée en regard de la surface oblique 16a, pour former une cavité annulaire 34.

Comme on peut le voir en détail sur la figure 2, la membrane 40 est positionnée en sous-face du chapeau 12 et de la tête 32 du piston 30.

La membrane 40 présente une géométrie spécifique formée de quatre surfaces consécutives et concentriques. Ainsi, dans le mode de réalisation ici présenté, la membrane 40 comprend une surface d'appui extérieure 41, une surface plane intermédiaire 42, une concavité 44 et une protrusion 45.

La protrusion 45 présente une géométrie sensiblement cylindrique et une extrémité conique 46 conçue pour obturer l'orifice aval 22.

L'extrémité conique 46 garantit une pénétration hydrodynamique optimale, qui permet de réduire les efforts exercés sur le piston 30 lors de la fermeture du robinet de remplissage 1, et qui permet aussi d'augmenter la vitesse de fermeture du robinet de remplissage 1.

On peut remarquer, sur la figure 2, que la protrusion 45 est adaptée pour envelopper la tête 32 et la collerette 33 du piston 30. Ainsi la protrusion 45 présente une forme intérieure complémentaire de la tête 32 du piston 30. En outre, il est visible que l'extrémité conique 46 présente une épaisseur plus importante que l'épaisseur du reste de la membrane 40. En effet, la surépaisseur de l'extrémité conique 46 permet de garantir l'étanchéité de l'obturation de l'orifice aval.

De plus, il est notable que la concavité 44 présente sensiblement trois parois 44a-44b-44c. La première paroi 44a et la seconde paroi 44b sont adaptées pour épouser la forme de la gorge 16. La seconde paroi 44b épouse la forme de la surface oblique 16a. La troisième paroi 44c est conformée pour épouser la forme de la zone en contre-dépouille 38 du piston 30.

Il s'agit là d'un point important de l'invention. Comme cela sera développé par la suite, la conformation spécifique de la concavité 44 permet l'exercice d'une contre-pression hydraulique qui accélère la fermeture du robinet de remplissage 1 et autorise l'utilisation d'un levier 7 de faible longueur.

Préférentiellement la membrane 40 est réalisée dans un matériau élastomère adapté pour assurer une étanchéité en milieu humide.

Le fonctionnement du robinet de remplissage 1 est le suivant.

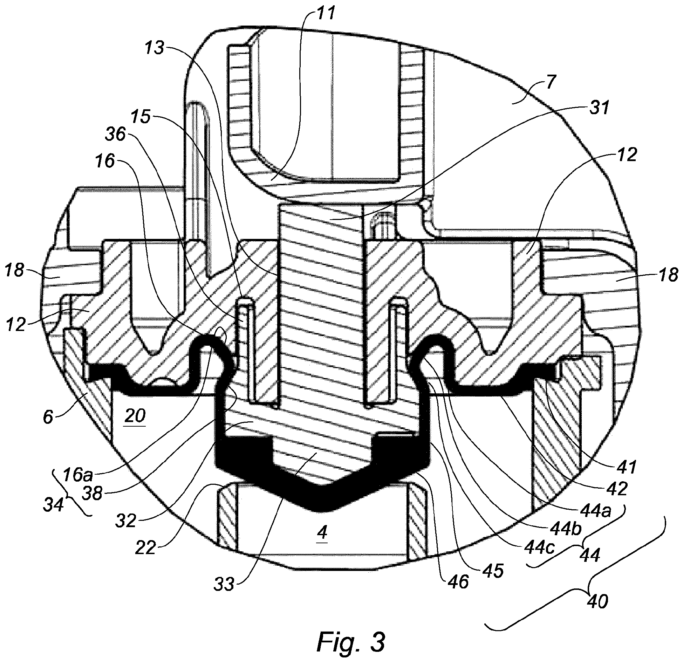

Il est précisé que la description qui va suivre part d'une situation dans laquelle le robinet de remplissage 1 est ouvert, comme cela est représenté en détails sur la figure 3, et positionné dans un réservoir d'un dispositif de toilettes.

En position ouverte, l'orifice aval 22 est libre. L'eau issue de la canalisation d'arrivée d'eau 2 remplit la chambre 20 et s'introduit dans la canalisation de remplissage 4 pour être, ensuite, déversée dans le réservoir. Il est notable que la conformation de la chambre 20 ne permet, à l'eau issue de la canalisation d'arrivée d'eau 2, de pénétrer dans la canalisation de remplissage 4, que lorsque la chambre 20 est presque entièrement immergée. L'immersion de la chambre garantit une circulation, sensiblement constante, d'eau dans la concavité 44. Ainsi, l'assistance hydraulique lors de la fermeture du robinet de remplissage 1 peut être appliquée en permanence, quel que soit le volume d'eau présent dans le réservoir.

Lorsque l'eau atteint un niveau haut de la boite 9, le flotteur 9a coulisse le long du carter 5 et exerce un effort sur le levier 7. Sous la pression exercée par le flotteur 9a, le levier 7 pivote dans la chape 8. En pivotant, la came 11 du levier 7 enfonce le piston 30 dans la chambre 20 et amorce la fermeture du robinet de remplissage 1.

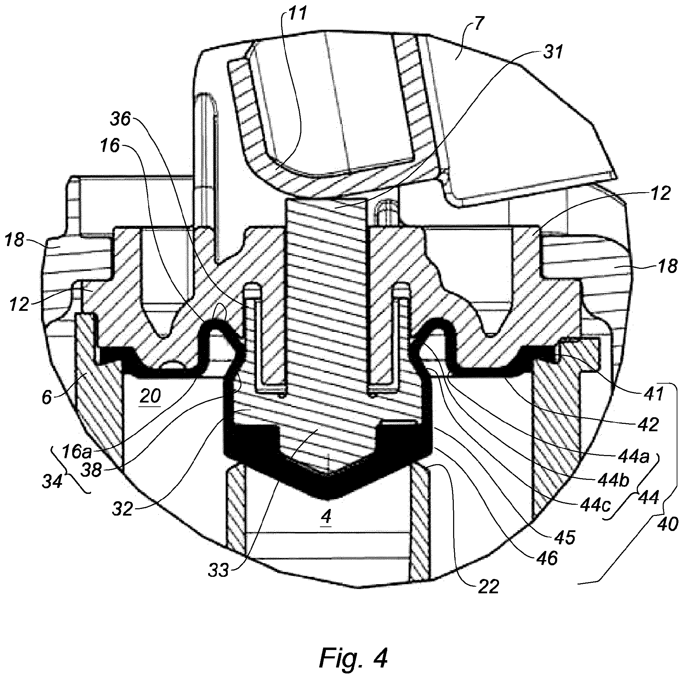

De plus, l'eau présente dans la gorge 44 exerce une contre-pression sur la troisième paroi 44a de la concavité 44. La contre-pression exercée par l'eau sur la troisième paroi 44a de la concavité 44 est transmise sur la zone en contre-dépouille 38 du piston 30, ce qui accélère la descente du piston 30 dans la chambre 20 et l'obturation de l'orifice aval 22, tel que cela est visible sur la figure 4.

Ainsi, l'utilisation d'une contre-pression hydraulique pour assister la fermeture du robinet de remplissage 1 autorise l'usage d'un levier 7 de plus petite longueur que la plupart des leviers présents dans les dispositifs de l'art antérieur. En effet, le piston 30 est amené en position fermée sous l'action combinée de l'effort exercé par le levier 7 et de la contre-pression hydraulique.

Le robinet de remplissage selon l'invention offre donc l'avantage d'utiliser une assistance hydraulique qui autorise l'usage d'un levier de dimension réduite, et qui peut fonctionner sur une large plage de pression de l'eau issue de la canalisation d'arrivée d'eau. De plus, la contre-pression générée sur la zone en contre-dépouille permet d'accélérer la fermeture du robinet de remplissage ce qui réduit les éventuelles nuisances sonores pour l'utilisateur.

## Revendications

1. Robinet de remplissage (1) pour réservoir de toilettes comprenant,
(i) un corps (6) dans lequel est ménagé une chambre (20) présentant un orifice amont (21) conçu pour être connecté à une canalisation d'arrivée d'eau (2), et un orifice aval (22) conçu pour être connecté à une canalisation de remplissage (4) d'un réservoir de toilettes,
(ii) un piston (30) comprenant une tête (32) et une tige (31), conçu pour être déplacé entre une position ouverte dans laquelle la tête (32) du piston (30) autorise la circulation d'un liquide au travers de l'orifice aval (22) et une position fermée dans laquelle la tête (32) du piston (30) obture l'orifice aval (22) de façon étanche,
la tête (32) du piston (30) présentant au moins une zone en contre-dépouille (38), adaptée pour permettre l'exercice d'une contre-pression hydraulique assistant le passage du piston (30) vers sa position fermée, le corps (6) présentant au moins une surface oblique (16a) par rapport à l'axe de déplacement du piston (30) juxtaposée à ladite au moins une zone en contre-dépouille (38), ladite au moins une zone en contre-dépouille (38) et ladite au moins une surface oblique (16a) forment une cavité annulaire (34), **caractérisé en ce qu'**une membrane (40) élastomère, positionnée dans la chambre (20), recouvre la tête (32) du piston (30) et la cavité annulaire (34), pour étanchéifier l'obturation de l'orifice aval (22) par la tête (32) du piston (30).

2. Robinet de remplissage (1) pour réservoir de toilettes selon la revendication 1 **caractérisé en ce que** la membrane (40) est conçue pour épouser la forme de la cavité annulaire (34), pour former une concavité (44) permettant la transmission d'un effort de contre-pression sur la tête (32) du piston (30).

3. Robinet de remplissage (1) pour réservoir de toilettes selon la revendication 2 **caractérisé en ce que** la concavité (44) de la membrane (40) est conçue pour être étirée, pour permettre le déplacement du piston (30).

4. Robinet de remplissage (1) pour réservoir de toilettes selon l'une des revendications 1 à 3 **caractérisé en ce que** le corps (6) comprend au moins une ouverture obturée par un chapeau (12).

5. Robinet de remplissage (1) pour réservoir de toilettes selon les revendications 1 et 4 **caractérisé en ce que** la membrane (40) est positionnée entre le chapeau (12) et le corps (6), pour assurer l'étanchéité de l'obturation de l'ouverture par le chapeau (12).

6. Robinet de remplissage (1) pour réservoir de toilettes selon l'une des revendications 1 à 5 **caractérisé en ce que** le piston (30) est conçu pour être manoeuvré par un levier (7) présentant une came (11) à une première extrémité et lié à une boite (9) contenant un flotteur (9a) à une seconde extrémité.

## Patentansprüche

1. Füllventil (1) für Toilettenspülkasten, umfassend
(i) einen Körper (6), in dem eine Kammer (20) ausgebildet ist, aufweisend eine Stromaufwärtsöffnung (21), die gestaltet ist, um mit einem Wasserzulaufkanal (2) verbunden zu sein, und eine Stromabwärtsöffnung (22), die gestaltet ist, um mit einem Einfüllkanal (4) eines Toilettenspülkastens verbunden zu sein,
(ii) einen Kolben (30), umfassend einen Kopf (32) und eine Stange (31), der gestaltet ist, um zwischen einer geöffneten Position, in welcher der Kopf (32) des Kolbens (30) die Zirkulation einer Flüssigkeit durch die Stromabwärtsöffnung (22) erlaubt, und einer geschlossenen Position, in welcher der Kopf (32) des Kolbens (30) die Stromabwärtsöffnung (22) dicht verschließt, verlagert zu werden,
wobei der Kopf (32) des Kolbens (30) mindestens eine hinterschnittene Zone (38) aufweist, die geeignet ist, die Ausübung eines hydraulischen Gegendrucks zu erlauben, der den Übergang des Kolbens (30) in seine geschlossene Position unterstützt, wobei der Körper (6) mindestens eine in Bezug zur Verlagerungsachse des Kolbens (30) schräge Fläche (16a) aufweist, die zu der mindestens einen hinterschnittenen Zone (38) benachbart ist, wobei die mindestens eine hinterschnittene Zone (38) und die mindestens eine schräge Fläche (16a) einen ringförmigen Hohlraum (34) bilden, **dadurch gekennzeichnet, dass** eine Elastomermembran (40), die in der Kammer (20) positioniert ist, den Kopf (32) des Kolbens (30) und den ringförmigen Hohlraum (34) bedeckt, um den Verschluss der Stromabwärtsöffnung (22) durch den Kopf (32) des Kolbens (30) abzudichten.

2. Füllventil (1) für Toilettenspülkasten nach Anspruch 1, **dadurch gekennzeichnet, dass** die Membran (40) gestaltet ist, um die Form des ringförmigen Hohlraums (34) anzunehmen, um eine Konkavität (44) zu bilden, die die Übertragung einer Gegendruckkraft auf den Kopf (32) des Kolbens (30) erlaubt.

3. Füllventil (1) für Toilettenspülkasten nach Anspruch 2, **dadurch gekennzeichnet, dass** die Konkavität (44) der Membran (40) gestaltet ist, um gestreckt zu sein, um die Verlagerung des Kolbens (30) zu erlauben.

4. Füllventil (1) für Toilettenspülkasten nach einem der Ansprüche 1 bis 3, **dadurch gekennzeichnet, dass** der Körper (6) mindestens eine von einer Kappe (12) verschlossene Öffnung umfasst.

5. Füllventil (1) für Toilettenspülkasten nach den Ansprüchen 1 und 4, **dadurch gekennzeichnet, dass** die Membran (40) zwischen der Kappe (12) und dem Körper (6) positioniert ist, um die Dichtigkeit des Verschlusses der Öffnung durch die Kappe (12) zu sichern.

6. Füllventil (1) für Toilettenspülkasten nach einem der Ansprüche 1 bis 5, **dadurch gekennzeichnet, dass** der Kolben (30) gestaltet ist, um von einem Hebel (7) bewegt zu werden, der eine Kurvenscheibe (11) an einem ersten Ende aufweist und mit einem Behälter (9) verbunden ist, der an einem zweiten Ende einen Schwimmer (9a) enthält.

## Claims

1. A fill valve (1) for a toilet tank comprising,
(i) a body (6) wherein is formed a chamber (20) having an upstream orifice (21) designed to be connected to a water supply pipe (2), and a downstream orifice (22) designed to be connected to a filling pipe (4) of a toilet tank,
(ii) a piston (30) comprising a head (32) and a rod (31), designed to be displaced between an open position wherein the head (32) of the piston (30) allows the circulation of a liquid through the downstream orifice (22) and a closed position wherein the head (32) of the piston (30) seals the downstream orifice (22) in a tight manner, the head (32) of the piston (30) having at least one undercut area (38), adapted to allow exerting a hydraulic back-pressure assisting the switching of the piston (30) to its closed position, the body (6) having at least one oblique surface (16a), with respect to the axis of displacement of the piston (30), juxtaposed to said at least one undercut area (38), said at least one undercut area (38) and said at least one oblique surface (16a) forming an annular recess (34), **characterized in that** an elastomeric membrane (40), positioned in the chamber (20), covers the head (32) of the piston (30) and the annular recess (34), in order to make the sealing of the downstream orifice (22) tight through the head (32) of the piston (30).

2. The fill valve (1) for a toilet tank according to claim 1 **characterized in that** the membrane (40) is designed to conform to the annular recess (34), in order to form a concavity (44) allowing the transmission of a back-pressure force on the head (32) of the piston (30).

3. The fill valve (1) for a toilet tank according to claim 2 **characterized in that** the concavity (44) of the membrane (40) is designed to be stretched in order to allow the displacement of the piston (30).

4. The fill valve (1) for a toilet tank according to any of claims 1 to 3 **characterized in that** the body (6) comprises at least one opening sealed by a bonnet (12).

5. The fill valve (1) for a toilet tank according to claims 1 and 4 **characterized in that** the membrane (40) is positioned between the bonnet (12) and the body (6) in order to ensure the tightness of the sealing of the opening by the bonnet (12).

6. The fill valve (1) for a toilet tank according to any of claims 1 to 5 **characterized in that** the piston (30) is designed to be operated by a lever (7) having a cam (11) at a first end and connected to a box (9) containing a float (9a) at a second end.
